# EUROPEAN PATENT APPLICATION

(11) **EP 4 491 982 A1**
(43) Date of publication of application: **15.01.2025**
(21) Application number: 23184547.0
(22) Date of filing: 10.07.2023
(51) Int. Cl.: F25D 19/00, F25B 9/14

(54) **APPARATUS FOR COOLING A SAMPLE ENVIRONMENT AND METHOD OF PROTECTING A SAMPLE FROM VIBRATIONS OF A VESSEL OF A CONTINUOUSLY COOLED DRY CRYOSTAT**

(71) Applicant: Technische Universität München, in Vertretung des Freistaates Bayern, 80333 München (DE)
(72) Inventor: Wex, Alexander, 82008 Unterhaching (DE); Strauß, Raimund, 81667 München (DE); Rothe, Johannes, 85757 Karlsfeld (DE); Pattavina, Luca, 80802 München (DE)
(74) Representative: Koplin, Moritz

(57) **Abstract**

Provided is an apparatus for cooling a sample environment. The apparatus comprises a vessel (14) and a sample holder (16). The vessel (14) is divided into a lower segment (18), a middle segment (20), and an upper segment (22). The sample holder (16) traverses the upper segment (22) and the middle segment (20) and extends into the sample environment (12) which is in the lower segment (18). The sample holder (16) is connected to a first structure (34a) separating the lower segment (18) and the middle segment (20), by a first flexible heat-conducting bridge (32). The first structure (34a) is configured to be cooled below a first temperature. The sample holder (16) is connected to a second structure (34a) separating the middle segment (20) and the upper segment (22), by a second flexible heat-conducting bridge (32). The second structure (34b) is configured to be cooled below a second temperature, the second temperature being above the first temperature. Said flexible heat-conducting bridges (23) are configured to allow for a relative movement between the vessel (14) and the sample holder (16).

## Description

### FIELD

The present disclosure relates to an apparatus for cooling a sample environment, a sample holder, and a method of protecting a sample from vibrations of a vessel of a continuously cooled dry cryostat. In particular, the present disclosure relates to a continuously cooled dry cryostat which is free from rigid mechanical connectors between the sample holder and the vessel.

### BACKGROUND

A dry cryostat may be cooled by a pulse tube. However, continuously cooling a dry cryostat by a pulse tube may be challenging because the pulse tube may cause vibrations which propagate towards the sample.

### SUMMARY

An apparatus for cooling a sample environment comprises a vessel and a sample holder. The vessel is divided into a lower segment, a middle segment, and an upper segment. The sample holder traverses the upper segment and the middle segment and extends into the sample environment which is in the lower segment. The sample holder is connected, by a first flexible heat-conducting bridge, to a first structure separating the lower segment and the middle segment. The first structure is configured to be cooled below a first temperature. The sample holder is connected, by a second flexible heat-conducting bridge, to a second structure separating the middle segment and the upper segment. The second structure is configured to be cooled below a second temperature which is above the first temperature. The flexible heat-conducting bridges are configured to allow for a relative movement between the vessel and the sample holder.

In this regard, the term "sample environment", as used throughout the description and the claims, particularly refers to an evacuated space for accommodating a sample. The sample environment may be arranged in a final cooling stage of the apparatus. The sample environment may be arranged at, or close to, the bottom of the vessel. The vessel may have multiple outer layers with evacuated space between the layers. In this way, the temperature in the vessel may decrease towards the center of the bottom of the vessel, making the sample environment to coincide with the coldest portion of the space inside the vessel.

Moreover, the term "sample", as used throughout the description and the claims, particularly refers to a material, device (e.g., a quantum computing device), or structure which is to be analyzed or which is to operate at a low temperature. For example, the temperature in the sample environment may be below 5 K, below 1 K, below 100 mK, or even below 10 mK. Furthermore, the term "sample holder", as used throughout the description and the claims, particularly refers to an elongated structure having a lower segment to which a plate or another support structure for placing the sample within the vessel may be attached. The sample holder may comprise a flexible portion extending from an upper end of the sample holder to an adapter for attaching the plate or the other support structure to the sample holder, thereby decreasing the susceptibility of the sample holder to vibrations.

Moreover, the term "vessel", as used throughout the description and the claims, particularly refers to a container which may accommodate the sample holder, and which may be evacuated during operation of the apparatus. The vessel may comprise multiple compartments, wherein each of said compartments is separated from another compartment by a structure serving as a heat sink. The structures separating the compartments may be provided with openings for accommodating the sample holder. Furthermore, the formulation "divided", as used throughout the description and the claims, particularly refers to partitioning a structure into non-overlapping substructures. The non-overlapping substructures may be divided by no more than a structure serving as a heat sink. Moreover, the terms "lower", "middle", and "upper", as used throughout the description and the claims, particularly refer to the position of the structures relative to each other. In particular, the terms may assume that the sample holder extends along a straight vertical line. For example, the lower, middle, and upper segments may form a segment stack where the lower segment is at the bottom, the upper segment is at the top and the middle segment is (sandwiched) between the lower segment and the upper segment.

Furthermore, the term "heat-conducting bridge", as used throughout the description and the claims, particularly refers to a connecting part (or heat exchanger) which allows for thermal conductivity where otherwise there would be no or only negligible heat conduction between the connected parts. Moreover, the formulation that the heat-conducting bridges "allow for a relative movement between the vessel and the sample holder", as used throughout the description and the claims, particularly refers to a movement which prevents vibrations to propagate from the vessel to the sample holder or at least reduces the propagation of vibrations which would otherwise occur if there was a rigid connection. In other words, the relative movement may only be loosely restricted by the flexible heat-conducting bridges to avoid vibrations to propagate from the vessel towards the sample. The relative movement may be a relative vertical movement and/or a relative horizontal movement.

Using flexible heat-conducting bridges may thus reduce vibrations of the sample holder particularly if rigid mechanical connections between the vessel and the sample holder can be replaced with flexible heat-conducting bridges. For example, if there are no rigid mechanical connections between the vessel and the sample holder but only flexible heat-conducting bridges, vibrations of the sample holder may be reduced as compared to if there were rigid mechanical connections between the vessel and the sample holder.

The vessel may be configured to be placed on a first support structure. The sample holder may be configured to be hanging from a second support structure. For example, the first support structure may be a floor and the second support structure may be a ceiling or a frame which is placed at the floor but is not connected (other than by the floor) to the first support structure. In other words, the first and second support structures may be mechanically separated (as much as practicable) to avoid vibrations to travel from the first support structure to the second support structure.

The apparatus may further comprise an X-Y-stage, wherein the sample holder is configured to be attached to the X-Y-stage, wherein the X-Y-stage is configured to connect the sample holder to the second support structure and to allow for a horizontal displacement of the sample holder.

The sample holder may be divided into a lower segment, a middle segment, and an upper segment. The middle segment and the lower segment of the sample holder may differ in thermal conductivity. For example, a thermal conductivity of a material from which the middle segment is made may be higher than a thermal conductivity of a material from which the lower segment is made. For instance, the middle segment may be made of copper and the lower segment may be made of a polyamide. The middle segment and the upper segment of the sample holder may also differ in thermal conductivity. For example, a thermal conductivity of a material from which the middle segment is made may be higher than a thermal conductivity of a material from which the upper segment is made. For instance, the upper segment may be made of steel.

The upper segment of the sample holder may comprise a helical portion. For example, the upper segment of the sample holder may be formed by a spring. The helical portion may reduce the heat conductivity from one end of the helical portion to the other end of the helical portion as compared to a straight portion due to the increased length of the member or wire forming the helical portion. Moreover, the helical portion may allow for a vertical and/or horizontal movement of the sample holder relative to the vessel.

The upper segment of the sample holder may comprise a first shield which is connected, by a third flexible heat-conducting bridge, to a third structure in the upper segment of the vessel. The first shield may be integrated into the helical portion and may serve to shield a lower segment of the sample holder from thermal radiation. The third structure may be cooled below a third temperature which is above the second temperature. The first shield may thus be cooled as a consequence of the flexible heat-conducting bridge which connects the first shield to the third structure.

The upper segment of the sample holder may comprise a second shield which is connected, by a fourth flexible heat-conducting bridge, to the third structure in the upper segment of the vessel. The second shield may be integrated into the helical portion and may serve to shield the first shield from thermal radiation. The second shield may be cooled as a consequence of the flexible heat-conducting bridge which connects the second shield to the third structure.

Having multiple shields may allow for a weaker thermal (and hence mechanical) coupling of the shields to the vessel than a single shield which is supposed to have the same thermal effect as the multiple shields.

The apparatus may further comprise an elastic vacuum portion, wherein at least a part of the upper segment of the sample holder may extend through the elastic vacuum portion. The elastic vacuum portion may serve to accommodate a part of the upper segment of the sample holder which extends beyond the vessel. There may be a gap between the inner surface of the elastic vacuum portion and the part of the upper segment of the sample holder which extends beyond the vessel. This may ensure that no vibrations are transmitted from the elastic vacuum portion towards the sample. The elastic vacuum portion may be a elastic vacuum bellow.

The apparatus may be a cryostat which may be configured to continuously cool the first structure and the second structure. In this regard, the formulation "to continuously cool", as used throughout the description and the claims, particularly refers to the ability to analyze or operate the sample while cooling takes place.

The cryostat may be a dry cryostat. For example, the cryostat may comprise, or may be connected to, a pulse tube.

In other words, analysis and operation of the sample may be independent of pulse tube cooling, as vibrations caused by pulse tube cooling do not propagate toward the sample due to the mechanical decoupling of the sample holder and the (cooling stages within the) vessel.

The first temperature may be 5 K, preferably 1 K, more preferably 100 mK, or even more preferably 10 mK. The second temperature may be 100K, preferably 10 K, more preferably 5 K, or even more preferably 1 K. A temperature below the first temperature may be reached by cooling the corresponding structure with a He_{3/}He₄ dilution refrigerator. A temperature below the second temperature may be reached by cooling the corresponding structure with an adiabatic demagnetization refrigerator.

Although the sample holder may be an integral part of the apparatus, the sample holder may also be a stand-alone component which can be integrated into an existing vessel. Therefore, the present invention also extends to the sample holder as such. As described above, the sample holder may be divided into a lower segment, a middle segment, and an upper segment, wherein the middle segment and the lower segment of the sample holder may differ in thermal conductivity. As explained above, a thermal conductivity of a material from which the middle segment is made may be higher than a thermal conductivity of a material from which the lower segment is made. For instance, the middle segment may be made of copper and the lower segment may be made of a polyamide. As explained above, the middle segment and the upper segment of the sample holder may also differ in thermal conductivity. For example, a thermal conductivity of a material from which the middle segment is made may be higher than a thermal conductivity of a material from which the upper segment is made. For instance, the upper segment may be made of steel.

As explained above, the upper segment of the sample holder may comprise a helical portion. For example, the upper segment of the sample holder may be formed by a spring. The helical portion may reduce the heat conductivity from one end of the helical portion to the other end of the helical portion as compared to a straight portion due to the increased length of the member or wire forming the helical portion. Moreover, the helical portion may allow for a vertical and/or horizontal movement of the sample holder relative to the vessel.

The upper segment of the sample holder may comprise a first shield which is connectible, by a flexible heat-conducting bridge, to a structure in the upper segment of the vessel. The first shield may be integrated into the helical portion and may serve to shield a lower segment of the sample holder from thermal radiation. The first shield may be cooled as a consequence of the flexible heat-conducting bridge which connects the first shield to the structure.

The upper segment of the sample holder may comprise a second shield which is connected, by another flexible heat-conducting bridge, to the structure. The second shield may be integrated into the helical portion and may serve to shield the first shield from thermal radiation. The second shield may be cooled as a consequence of the flexible heat-conducting bridge which connects the second shield to the structure.

The sample holder may come with one or more other shields which are configured to allow for a relative vertical and/or horizontal movement of the elongate member relative to a shield when the shield is attached to a structure. The shields may be disc-shaped and have circular openings at their centers. The diameters of the openings may be such that they allow for a horizontal movement (without physical contact) of the disc relative to the sample holder, when a disc is subject to vibrations caused by the operation of the apparatus.

A method of protecting a sample from vibrations of a vessel of a continuously cooled dry cryostat comprises inserting a sample holder vertically into the continuously cooled dry cryostat and establishing flexible thermal bridges between the sample holder and the vessel. The sample holder and the vessel are free from rigid mechanical connectors connecting the sample holder to the vessel.

The sample holder may be divided into a lower segment, a middle segment, and an upper segment. The thermal conductivity of a material comprised in the middle segment may be higher than a thermal conductivity of a material comprised in the upper segment. The thermal conductivity of the material comprised in the middle segment may also be higher than a thermal conductivity of a material comprised in the lower segment. For example, the material comprised in the middle segment may be copper, the material in the upper segment may be steel, and the material in the lower segment may be a polyamide.

The upper segment of the sample holder may comprise a helical portion. The helical portion may be spring-shaped. For example, the helical portion may be formed by a steel spring. The steel spring may allow for a vertical and/or horizontal movement of the sample holder relative to the vessel.

The upper segment may comprise one, two or more shields integrated into the helical portion. The shield(s) may have a circular shape. The shield(s) may be formed of copper. Each shield may be connected to the vessel by one of the flexible thermal bridges.

At least a part of the upper segment of the sample holder may extend through an elastic vacuum portion. A lower end of the elastic vacuum portion may engage with a joint on a top plate of the vessel. An upper end of the elastic vacuum portion may engage with a support structure attached to the ceiling.

Notably, all features described in relation to the apparatus may also be features of the method and vice versa.

### BRIEF DESCRIPTION OF THE DRAWINGS

The foregoing aspects and many of the attendant advantages will become more readily appreciated as the same become better understood by reference to the following description of embodiments, when taken in conjunction with the accompanying drawings, wherein like reference numerals refer to like parts throughout the various views, unless otherwise specified.
Fig. 1 schematically illustrates an apparatus for cooling a sample environment.
Fig. 1a illustrates the apparatus shown in Fig. 1 in operation.
Fig. 2 schematically illustrates a modification of the apparatus shown in Fig. 1.
Fig. 3 schematically illustrates a modification of the apparatus shown in Fig. 2.
Fig. 4 schematically illustrates a modification of the apparatus shown in Fig. 3.
Fig. 5 shows a flow chart of a method of protecting a sample from vibrations of a vessel of a continuously cooled dry cryostat.

Notably, the drawings are not necessarily drawn to scale and unless otherwise indicated, they are merely intended to conceptually illustrate the structures and procedures described herein.

### DESCRIPTION OF EMBODIMENTS

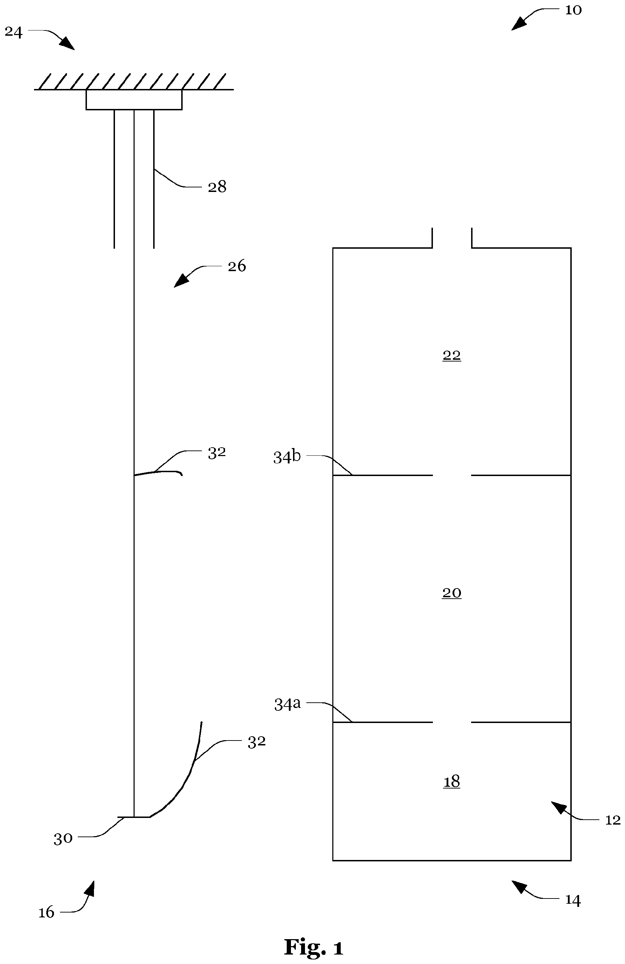

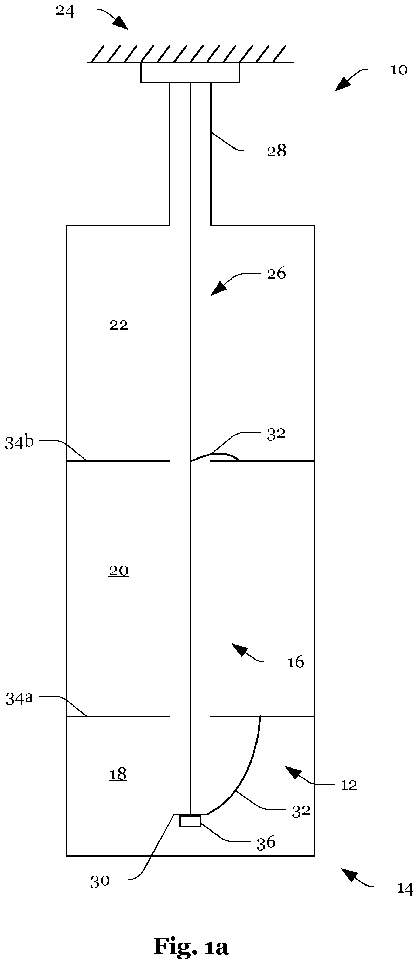

Fig. 1 schematically illustrates an apparatus 10 for cooling a sample environment 12. The apparatus 10 comprises a vessel 14 and a sample holder 16. The vessel 14 is configured to be evacuated and is divided into a lower segment 18, a middle segment 20, and an upper segment 22. Each of said segments 18, 20, and 22 constitutes a cryostat cooling stage with the coldest cooling stage being arranged at the bottom of the apparatus 10. To evacuate the vessel 14, the vessel 14 may be connected to a vacuum pump (not shown) or may be placed in a vacuum environment (not shown).

The sample holder 16 comprises an elongate member 26. One end of the elongate member 26 points vertically upward, extends through an elastic vacuum portion 28 in the form of an elastic vacuum bellow, and is attached to the ceiling 24. Instead of being attached to the ceiling 24, the vertically upward pointing end of the elongate member 26 may also be attached to a frame (not shown) which is separate from the vessel 14 but extends over the vessel 14. An X-Y stage may be inserted between the vertically upward pointing end of the elongate member 26 and the ceiling 24 or frame (not shown). The X-Y stage may allow for horizontally displacing the elongate member 26.

The other end of the elongate member 26 points vertically downward. An adapter 30 is attached to the freely swinging end of the elongate member 26, thereby creating a pendulum-like structure. When the sample holder 16 is inserted into the vessel 14, as schematically illustrated in Fig. 1a, the sample holder 16 extends through the elastic vacuum portion 28, the upper segment 22, and the middle segment 20 into the sample environment 12 (in the lower segment 18).

For cooling, the sample holder 16 is connected, by flexible heat-conducting (thermal) bridges 32, to structures 34a and 34b (e.g., cooling plates) which separate the consecutive segments 18, 20, and 22. More specifically, the adapter 30 is connected by one or more heat-conducting bridges 32 to a structure 34a (which separates the segment 18 from the segment 20). The one or more heat-conducting bridges 32 may be arranged at equal distances around the adapter 30 and may extend radially outwardly and upwardly. The one or more heat-conducting bridges 32 may comprise 7 copper stripes having a thickness of below 0.2 mm (e.g., 0.1 mm), a width of 5 cm, and a length of 20 cm. The structure 34a (which separates the segment 18 from the segment 20) may be configured to cool the adapter 30 and the sample 36 to a temperature below 100 mK or even below 10 mK.

The (middle of the) sample holder 16 is further connected by one or more heat-conducting bridges 32 to a structure 34b (which separates the segment 20 from the segment 22). The structure 34b (which separates the segment 20 from the segment 22) may be configured to cool the sample holder 16 from the structure 34b downwards to a temperature below 5 K (e.g., 4 K). The flexible heat-conducting bridges 32 may be formed by wires or stripes which are made of a strong thermal conductor such as copper.

The flexible heat-conducting bridges 32 allow for a horizontal movement of the sample holder 16 relative to the vessel 14. Moreover, the flexible heat-conducting bridges 32 are designed to avoid transmitting vibrations from the vessel 14 to the sample holder 16 and, in consequence, to the sample 36. For example, the vessel 14 may vibrate as a result of the operation of a pulse tube (not shown) which provides a cooling fluid circulating through the structure 34b (which separates the segment 20 from the segment 22).

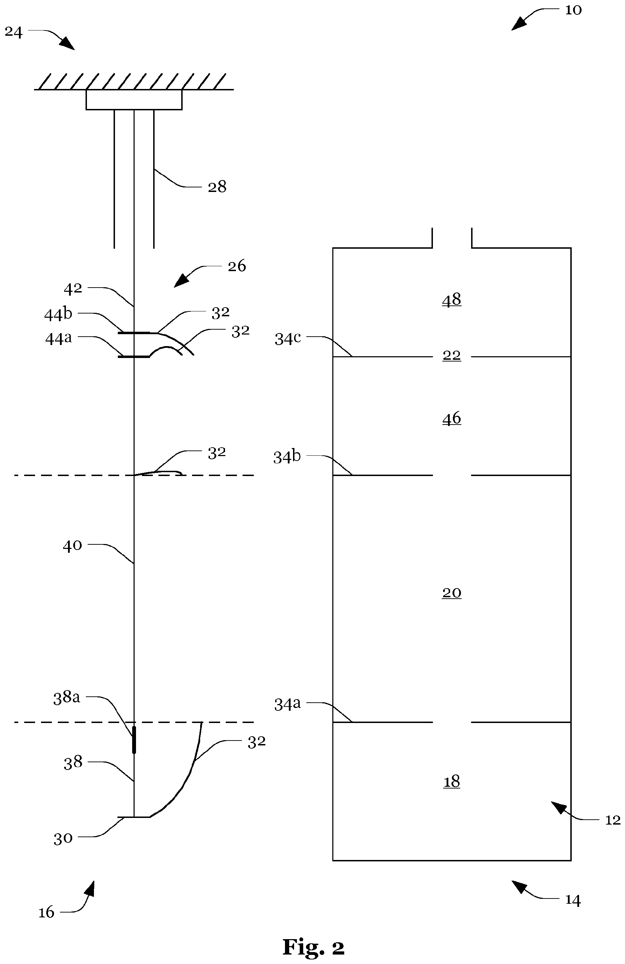

As schematically illustrated in Fig. 2, the sample holder 16 may be divided into a lower segment 38, a middle segment 40, and an upper segment 42. The upper segment 42 may be made of a weak thermal conductor to insulate the remainder of the sample holder 16 (as far as practicable) from the ceiling 24. For example, the upper segment 42 may be made of, or may comprise, steel. For instance, the upper segment 42 may be formed by a steel wire. The steel wire may be attached to the X-Y table through a threaded element (not shown).

The middle segment 40 may be made of a strong thermal conductor to facilitate cooling of the middle segment 40 through the heat-conducting bridge 32 which connects the middle segment 40 to the structure 34b. For example, the middle segment 40 may be made of, or may comprise, copper. For instance, the middle segment 40 may be formed by a copper wire. The copper wire may have a diameter of 1 to 3 mm, e.g., 2 mm. The copper wire may be attached to the steel wire by a copper connector (not shown). For example, a copper screw (not shown) may be attached to the steel wire and the copper screw may be fastened to the copper connector.

The lower segment 38 may be made of a weak thermal conductor to insulate the adapter 30 and the sample 36 (not shown) from the middle segment 40. For example, the lower segment 38 may be made of, or may comprise, polyamide or aramid. For instance, the lower segment 38 may be formed by a polyamide wire or an aramid wire. The polyamide or aramid wire may have a diameter of 0.5 mm to 1.5 mm, e.g., 1.0 mm. Copper screws may be fastened (e.g., by epoxy-resin) to both ends of the polyamide wire or aramid wire to connect the upper end of the polyamide wire or the aramid wire to a copper connector 38a at the lower end of the copper wire, and to connect the lower end of the polyamide wire or the aramid wire to the adapter 30.

Moreover, the apparatus 10 shown in Fig. 2 comprises an additional cooling stage when compared to the apparatus 10 shown in Fig. 1a because segment 22 is divided by a structure 34c into a subsegment 46 and a subsegment 48. The upper segment 42 of the sample holder 16 is provided with a radiation shield 44a which blocks thermal radiation from traveling from the subsegment 48 to the subsegment 46. The radiation shield 44a is connected by a heat-conducting bridge 32 to the structure 34c (which separates the subsegment 46 from the subsegment 48 and) which is configured to cool the radiation shield 44a. For example, the structure 34c (which separates the subsegment 46 from the subsegment 48) may be configured to cool the radiation shield 44a to a temperature below 50 K (e.g., 40 K). Moreover, the upper segment 42 of the sample holder 16 may be provided with another radiation shield 44b which is connected by a heat-conducting bridge 32 to the structure 34c (which separates the subsegment 46 from the subsegment 48).

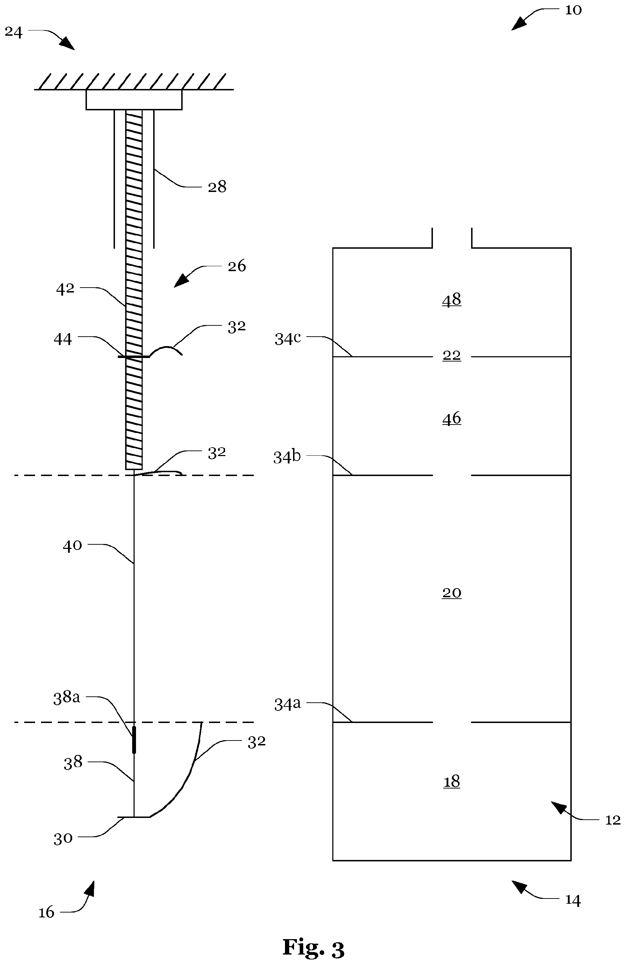

As schematically illustrated in Fig. 3, the upper segment 42 may comprise a helical portion which may be formed by a helical wire. The helical wire may be made of a weak thermal conductor to insulate the remainder of the sample holder 16 (as far as practicable) from the ceiling 24. For example, the upper segment 42 may be made of, or may comprise, steel. For instance, the upper segment 42 may be formed by a steel spring (e.g., EN 10270-3 / 1.4568). As the steel wire forming the steel spring is much longer than the steel spring, the thermal conductivity of the upper segment 42 may be reduced as compared to an upper segment 42 formed by a straight steel wire. Moreover, the radiation shield 44 may be integrated into the steel wire. If the upper segment 42 of the sample holder 16 is provided with two radiation shields 44a and 44b (not shown), both may be integrated into the steel wire.

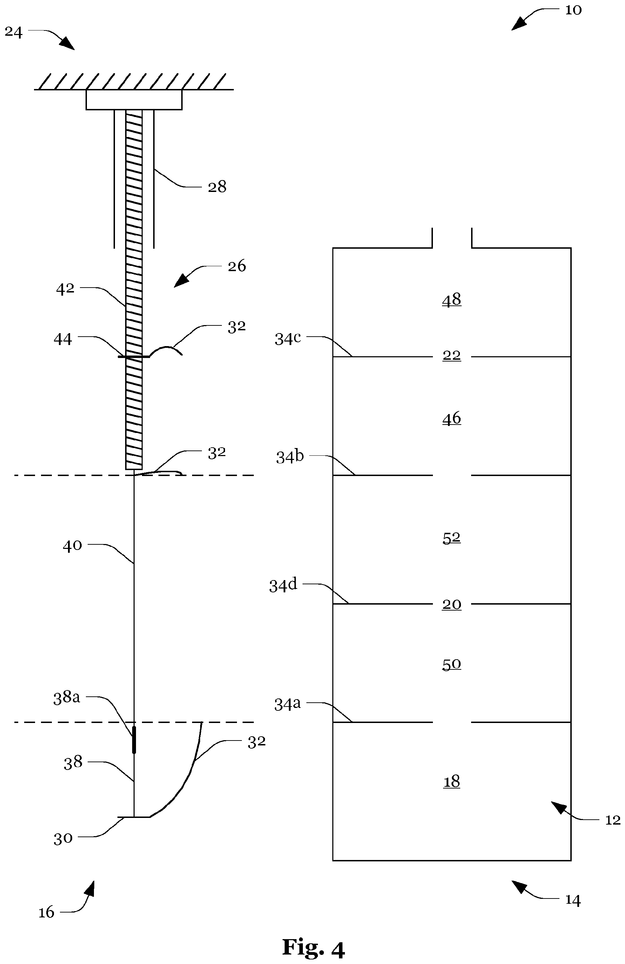

As schematically illustrated in Fig. 4, another cooling stage may be added to the apparatus 10 by dividing the segment 20 into a subsegment 50 and a subsegment 52. However, although a structure 34d (which separates the subsegment 50 from the subsegment 52) may be configured to be cooled to a temperature below 1 K (e.g., 800 mK), the structure 34d (which separates the subsegment 50 from the subsegment 52) may not be (directly) connected by one of the heat-conducting bridges 32 to the sample holder 16. Nevertheless, the structure 34d (which separates the subsegment 50 from the subsegment 52) may facilitate cooling the structure 34a (which separates the segment 18 from the segment 20) in that it serves as a heat sink for heat that is conducted from the subsegment 52 towards the subsegment 50.

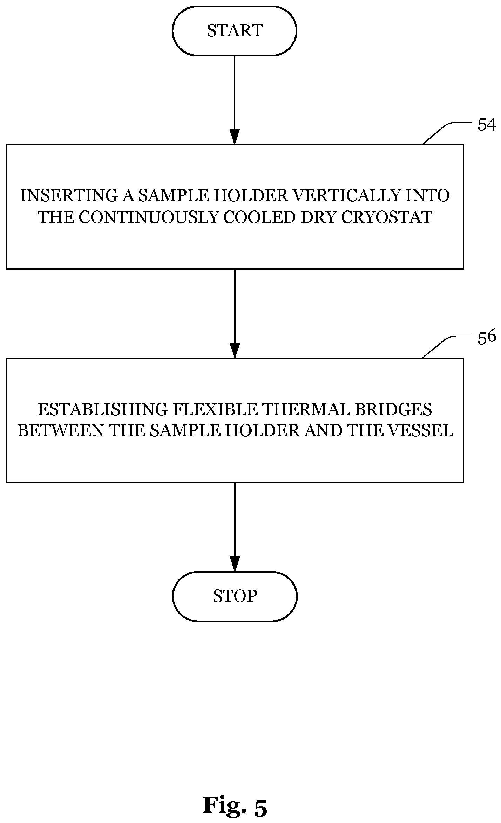

Fig. 5 shows a flow chart of a method of protecting the sample 36 from vibrations of the vessel 14. The method starts with a step 54 of inserting the sample holder 16 vertically into the continuously cooled dry cryostat. At step 56, the method is continued with establishing the flexible heat-conducting bridges 32 between the sample holder 16 and the vessel 14. Once the flexible heat-conducting bridges 32 between the sample holder 16 and the vessel 14 are established, cooling of the vessel 14 may commence.

### REFERENCE SIGNS LIST

- 10: apparatus
- 12: sample environment
- 14: vessel
- 16: sample holder
- 18: lower segment (vessel)
- 20: middle segment (vessel)
- 22: upper segment (vessel)
- 24: ceiling
- 26: elongate member
- 28: vacuum portion
- 30: adapter
- 32: heat-conducting bridge
- 34a: structure
- 34b: structure
- 34c: structure
- 34d: structure
- 36: sample
- 38: lower segment (sample holder)
- 38a: connector
- 40: middle segment (sample holder)
- 42: upper segment (sample holder)
- 44: shield
- 44a: shield
- 44b: shield
- 46: subsegment
- 48: subsegment
- 50: subsegment
- 52: subsegment
- 54: step
- 56: step

## Claims

1. An apparatus (10) for cooling a sample environment (12), comprising:
a vessel (14); and
a sample holder (16);
wherein the vessel (14) is divided into a lower segment (18), a middle segment (20), and an upper segment (22);
wherein the sample holder (16) traverses the upper segment (22) and the middle segment (20) and extends into the sample environment (12) which is in the lower segment (18);
wherein the sample holder (16) is connected to a first structure (34a) separating the lower segment (18) and the middle segment (20), by a first flexible heat-conducting bridge (32);
wherein the first structure (34a) is configured to be cooled below a first temperature;
wherein the sample holder (16) is connected to a second structure (34b) separating the middle segment (20) and the upper segment (22), by a second flexible heat-conducting bridge (32);
wherein the second structure (34b) is configured to be cooled below a second temperature, the second temperature being above the first temperature; and
wherein said flexible heat-conducting bridges (32) are configured to allow for a relative movement between the vessel (14) and the sample holder (16).

2. The apparatus (10) of claim 1, wherein the vessel (14) is configured to be placed on a first support structure and the sample holder (16) is configured to be hanging from a second support structure.

3. The apparatus (10) of claim 2, further comprising:
an X-Y-stage;
wherein the sample holder (16) is configured to be attached to the X-Y-stage;
wherein the X-Y-stage is configured to connect the sample holder (16) to the second support structure and to allow for a horizontal displacement of the sample holder (16).

4. The apparatus (10) of any one of claims 1 to 3, wherein the sample holder (16) is divided into a lower segment (38), a middle segment (40), and an upper segment (42), wherein the middle segment (40) of the sample holder (16) and the lower segment (38) of the sample holder (16) differ in thermal conductivity.

5. The apparatus (10) of claim 4, wherein the upper segment (42) of the sample holder (16) comprises a helical portion.

6. The apparatus (10) of claim 5,
wherein the upper segment (42) of the sample holder (16) comprises a first shield (44a) which is connected to a third structure (34c) in the upper segment (22) of the vessel (14), by a third flexible heat-conducting bridge (32); or
wherein the upper segment (42) of the sample holder (16) comprises the first shield (44a) and a second shield (44b) which is connected to the third structure (34c) in the upper segment (22) of the vessel (14), by a fourth flexible heat-conducting bridge (32).

7. The apparatus (10) of any one of claims 1 to 6, wherein the apparatus (10) is a cryostat which is configured to continuously cool the first structure (34a) and the second structure (34b).

8. The apparatus (10) of claim 7, wherein the cryostat is a dry cryostat.

9. The apparatus (10) of any one of claims 1 to 8, wherein the first temperature is 5 K, 1 K, 100 mK, or 10 mK.

10. A free-swinging sample holder (16) for a dry cryostat,
wherein the sample holder (16) is divided into a lower segment (18), a middle segment (20), and an upper segment (22),
wherein a thermal conductivity of a first material from which the middle segment (20) is made is higher than a thermal conductivity of a second material from which the lower segment (18) is made,
wherein the thermal conductivity of the first material from which the middle segment (20) is made is higher than a thermal conductivity of a third material from which the upper segment (22) is made.

11. The free-swinging sample holder (16) of claim 10, further comprising:
one or more shields (44a, 44b);
wherein an elongate member (26) extends through a circular opening in the one or more shields (44a, 44b); and
wherein a diameter of the circular opening allows for a relative movement between the one or more shields (44a, 44b) and the elongate member (26).

12. A method of protecting a sample (36) from vibrations of a vessel (14) of a continuously cooled dry cryostat, comprising:
inserting a sample holder (16) vertically into the continuously cooled dry cryostat;
establishing flexible thermal bridges (32) between the sample holder (16) and the vessel (14);
wherein the sample holder (16) and the vessel (14) are free from rigid mechanical connectors connecting the sample holder (16) to the vessel (14).

13. The method of protecting a sample (36) from vibrations of claim 12, wherein the sample holder (16) is divided into a lower segment (38), a middle segment (40), and an upper segment (42), wherein a thermal conductivity of a material comprised in the middle segment (40) is higher than a thermal conductivity of a material comprised in the upper segment (42) and the thermal conductivity of the material comprised in the middle segment (40) is higher than a thermal conductivity of a material comprised in the lower segment (38).

14. The method of protecting a sample (36) from vibrations of claim 13, wherein the upper segment (42) of the sample holder (16) comprises a helical portion.

15. The method of protecting a sample (36) from vibrations of claim 14, wherein the upper segment (42) comprises a shield (44) integrated into the helical portion.
